# EUROPEAN PATENT APPLICATION

(11) **EP 3 323 499 A1**
(43) Date of publication of application: **23.05.2018**
(21) Application number: 16199251.6
(22) Date of filing: 17.11.2016
(51) Int. Cl.: B01D 61/12, B01D 61/22, C02F 1/00

(54) **APPARATUS AND METHOD FOR PURIFYING A LIQUID**

(71) Applicant: Brita GmbH, 65232 Taunusstein (DE)
(72) Inventor: Koehler, André, 56237 Deesen (DE)
(74) Representative: van Lookeren Campagne, Constantijn August

(57) **Abstract**

An apparatus for purifying a liquid includes a membrane filtration device (3) including at least a liquid inlet (4) and an outlet (5) for filtrate. The apparatus further includes an accumulator (14). The apparatus also includes a device (8) for regulating a flow of liquid, switchable between a first state, in which liquid is at least permitted to flow through the liquid inlet (4) and the filtrate outlet (5) to the accumulator (14), and a second state, in which this flow is essentially prevented. The switch is dependent on a parameter corresponding to at least one of a volume of the liquid in the accumulator (14), a pressure of the liquid in the accumulator (14) and a pressure differential between the liquid in the accumulator (14) and liquid in a section of the apparatus for liquid unfiltered by the membrane filtration device (3). The apparatus includes a device (24-28, 36) for metering a flow of liquid, arranged to delay a transition from one of the first and second states to the other that is in consequence of a value of the parameter crossing a threshold.

## Description

The invention relates to an apparatus for purifying a liquid, including:
a membrane filtration device including at least a liquid inlet and an outlet for filtrate;
an accumulator; and
a device for regulating a flow of liquid, switchable between a first state, in which liquid is at least permitted to flow through the liquid inlet and the filtrate outlet to the accumulator, and a second state, in which this flow is essentially prevented,
the switch being dependent on a parameter corresponding to at least one of a volume of the liquid in the accumulator, a pressure of the liquid in the accumulator and a pressure differential between the liquid in the accumulator and liquid in a section of the apparatus for liquid unfiltered by the membrane filtration device.

The invention also relates to a method of purifying a liquid, including:
operating a membrane filtration device to produce at least filtrate; and
storing the filtrate in an accumulator,
wherein production of the filtrate is interrupted in dependence on a parameter corresponding to at least one of a volume of the filtrate in the accumulator, a pressure of the filtrate in the accumulator and a pressure differential between the filtrate in the accumulator and liquid unfiltered by the membrane filtration device.

US 5,460,716 discloses a reverse osmosis water purification system comprising a reverse osmosis (RO) module. Purified water, the so-called permeate, is conveyed through a pump into an accumulator. This solution is achieved by utilising the water line pressure as the drive energy for the permeate pump, under which pressure the waste water or the concentrate of the RO module stands. It is proposed that a hydraulically driven shutoff valve is put into an untreated water supply pipe to the RO module and into a pipe between the permeate pump and the accumulator. This hydraulic shutoff valve blocks the water feed to the RO module when the storage pressure approaches a specific difference at the level of the line pressure, for example a difference ranging from 1.2 to 2 bar. After the storage pressure has dropped by about 1 bar due to the removal of water, the untreated water feed is released again.

The shutoff valve exhibits hysteresis, blocking the supply of water at a higher pressure differential between the liquid in the accumulator and in the supply pipe than the pressure differential at which flow is allowed to recommence. This addresses the problem that, if small amounts of permeate are taken from the accumulator and the latter is immediately replenished, a large proportion of the permeate will be produced at small pressure differentials across the membranes of the RO module, resulting in permeate of relatively poor quality.

A problem of using an hydraulically driven shutoff valve of which the operation is dependent on the pressure differential between the liquid in an accumulator and that in a supply pipe is that this pressure differential may vary if the pressure at which liquid is supplied is not constant. Such might be the case if the system is set up to receive water from the mains water supply in a building and an apparatus that draws relatively large amounts of water, like a washing machine or dish washer, is connected to the mains water supply in close vicinity to the system. The supply pressure may drop relatively far for a short time and then rise again. This leads to the production of small quantities of filtrate. Filtrate produced immediately after resumption of filtrate production is, however, of a relatively low quality.

It is an object of the invention to provide an apparatus and method of the types mentioned above in the opening paragraphs that allow the accumulator to be filled with filtrate of a relatively high purity and that are relatively unaffected by variations in the supply pressure.

This object is achieved according to a first aspect by the apparatus according to the invention, which is characterised by a device for metering a flow of liquid, arranged to delay a transition from one of the first and second states to the other that is in consequence of a value of the parameter crossing a threshold.

The membrane filtration device may be arranged to operate in a dead-end mode or in a cross-flow mode. In the latter case, it would include an outlet for retentate. The membrane filtration device may be a membrane filtration device for microfiltration, ultrafiltration or reverse osmosis. In the latter case, the filtrate may also be referred to as permeate, and retentate produced by the membrane filtration device may be referred to as concentrate. The membrane pore size may be sufficient to remove at least one solute from the liquid being purified, in addition to suspended particles, in particular at trans-membrane pressure differentials higher than 1.5 bar, e.g. higher than 2 bar. The membrane or membranes may, for example, include pores having a pore size of at most 10 Å.

The accumulator is an hydraulic accumulator for storing filtrate. It is at least connectable to an outlet of the apparatus and the filtrate outlet of the membrane filtration device. Filtrate is held in the accumulator under pressure from an external source, e.g. another liquid, a resilient element, a weight or the like. The accumulator may in particular be a hydropneumatic accumulator, in which case the external source is a gas or mixture of gases. The external source is separated from a reservoir for receiving the filtrate by a barrier of which at least a part is movable to approximate the pressure of the external source and the filtrate in the reservoir. The pressure will generally be arranged to increase as the reservoir fills with filtrate, at least when the filtrate volume surpasses a certain minimum volume. The accumulator enables filtrate temporarily to be supplied from the apparatus at a higher rate than the rate at which it is produced. The external pressure source ensures that the supply is under pressure without requiring a pump powered by an external power source.

The device for regulating a flow of liquid may be a valve or a positive-displacement pump, for example. It is switchable between a state in which liquid is at least permitted to flow through the liquid inlet and the filtrate outlet to the accumulator, and a state in which this flow is essentially prevented, the switch being dependent on at least one of a volume of liquid in the accumulator, a pressure of liquid in the accumulator and a pressure differential between the liquid in the accumulator and liquid in a section of the apparatus for liquid unfiltered by the membrane filtration device. The selected controlling variable is a measure of how much filtrate is in the accumulator. Thus, the production of permeate can be stopped when the accumulator is relatively full. The production of permeate recommences when the accumulator has been emptied by a relatively large amount. This improves the quality of the filtrate, especially when the apparatus is only used to supply very small amounts of filtrate intermittently. The quality of the filtrate immediately after the start of operation of the membrane filtration device is relatively low due to stagnation and diffusion of impurities through the membrane or membranes. By ensuring that a relatively large amount of filtrate is produced before the flow regulating device stops the filtrate production again, the purity of the filtrate in the accumulator is improved.

The apparatus includes a device for metering a flow of liquid, arranged to delay a transition from one of the first and second states to the other in consequence of a value of the parameter crossing a threshold whilst a volume of liquid is being metered. This may be a fixed or a variable volume of liquid. The metered liquid may be filtrate. The metering device ensures that the accumulator is emptied by a metered volume of liquid upon cessation of the production of filtrate or filled by a metered volume of liquid upon recommencement of the production of filtrate, or both. The flow regulating device may, in the state in which flow of liquid through the liquid inlet and the filtrate outlet to the accumulator is prevented, block flow through a conduit section upstream of the liquid inlet of the membrane filtration device or flow through a conduit section between the filtrate outlet and the accumulator in flow sense.

Because the device for metering a flow of liquid is arranged to delay a transition from one of the first and second states to the other in consequence of a value of the parameter crossing a threshold whilst metering the flow of liquid, the extra filling or emptying after the parameter value crosses the threshold is independent of the pressure of the untreated liquid.

In an embodiment, the metering device is arranged at least to meter a flow of filtrate.

Compared to metering the untreated liquid or retentate, in cases in which the membrane filtration device is arranged to operate in cross-flow mode, the metering device more closely tracks the amount of liquid added to or removed from the accumulator. The recovery ratio of the membrane filtration device has no influence. In this embodiment, the transition that is delayed is a transition from the first state to the second state, so that the accumulator is filled by the metered amount. The transition is triggered by a parameter value indicative of a partially empty reservoir in the accumulator.

In a particular variant of this embodiment, the metering device is arranged to meter a flow of filtrate from the filtrate outlet to the accumulator. This allows the metering device to be placed relatively close to the flow regulating device.

In an embodiment of the apparatus, the metering device is a mechanical device including at least one movable part arranged to move in proportion to a metered amount of liquid.

This obviates the need for signal conversion. The mechanical device can directly actuate the flow regulating device to inhibit or cause the transition between the

In an embodiment of the apparatus, the metering device includes a first movable part, arranged to move in proportion to a metered amount of liquid, the first movable part is arranged to enable a second movable part to be actuated into engagement with a co-operating part in dependence on a value of the parameter in only at least one certain position of the first movable part, and the flow regulating device is in one of the first and second states only when the second movable part engages the co-operating part to a certain extent.

This embodiment can function without electromechanical actuators and does not require complicated mechanisms either. The position of the first movable part determines whether the flow regulating device is in the first or second state. The position corresponding to a particular one of the first and second states is only reachable when the first movable part is in a particular positon or one of a set of particular positions relative to the second movable part. Since the first movable part is arranged to move in proportion to the metered amount of liquid, a certain amount of liquid will need to flow before the first movable part has reached that position (or one of the set of positions). If the position of the first movable part is always the same when the parameter crosses the threshold, then the amount of liquid that will need to flow will also always be the same. This will be the case if the movement of the first moving part is only initiated in response to the crossing of the threshold by the parameter value. Otherwise, the amount of liquid that will flow during the delay will vary, but at least some liquid will generally need to flow. This will particularly be the case if the range of alternative positions to the one position or set of position of the first movable part in which the second movable part can be actuated into engagement is relatively large. Generally, the metering device will be arranged such that the first movable part is driven by the liquid. It may be comprised in a turbine driven by the flow of liquid, for example.

In a variant of this embodiment, the second movable part is actuated by an hydraulic fluid having a pressure representative of, e.g. corresponding to, a value of the parameter.

This embodiment allows the transition from one of the first and second states to the other in consequence of a value of the parameter crossing the threshold to be effected purely hydraulically. In effect, the pressure of the liquid in the accumulator drives the second movable part, either directly or by being transferred to the hydraulic fluid.

In a variant of the embodiment in which the metering device includes a first movable part, arranged to move in proportion to a metered amount of liquid, the first movable part is arranged to enable a second movable part to be actuated into engagement with a co-operating part in dependence on a value of the parameter in only at least one certain position of the first movable part, and the flow regulating device is in one of the first and second states only when the second movable part engages the co-operating part to a certain extent, the first movable part is arranged to move at least one of the second movable part, the co-operating part, a part in a path between the second movable part and the co-operating part and a part in a fluid path from a source of pressurised hydraulic fluid to the second movable part.

Either or both of the co-operating part and the part in a path between the second movable part and the co-operating part may in fact be comprised in the first movable part. In that case, it or they correspond to a respective section of the first movable part. The position of the second movable part determines whether the flow-regulating device is in the first or second state. In this embodiment, the first movable part in effect blocks the movement of the second part into the position it would otherwise take in consequence of the value of the parameter crossing the threshold. This is a relatively simple and compact mechanical delaying mechanism.

In an embodiment, the metering device is arranged to meter at least a pre-determined volume upon enabling a transition from the second to the first state before a transition to the second state is enabled.

It is thus ensured that the filtrate produced immediately on resumption of the filtrate production is diluted with filtrate produced subsequently, so that the overall purity of the filtrate collected in the accumulator is relatively high. Production of filtrate in short bursts of low volume is prevented.

In an embodiment, the metering device is cyclical, a cycle corresponding to a certain amount of metered liquid, and the transition is only enabled at at least one certain stage in the cycle.

This allows the metering device permanently to meter the flow of liquid. It may be a mechanical device such as a turbine. It need not be reset to a starting position every time it has carried out its delaying function. At the same time, it is also ensured that the metering device meters at least a pre-determined volume - this volume corresponds to that associated with one cycle - upon enabling a transition from the second to the first state before a transition to the second state is enabled.

In an embodiment, the metering device is arranged to enable the transition upon a certain amount of liquid having been metered subsequent to the value of the parameter crossing the threshold.

This embodiment ensures that the quality of the filtrate is relatively consistent. The amount that is metered subsequent to the crossing of the threshold by the value of the parameter is essentially the same each time that the delay is triggered.

In an embodiment, the metering device is included in the device for regulating the flow of liquid, and the state in which the flow of liquid is essentially prevented is a state in which movement of at least one movable part of the metering device is prevented.

This embodiment is relatively easy to implement and makes use of a compact device comprising both the metering device and the flow-regulating device. In particular, the metering device can comprise a turbine or a positive displacement machine with a piston or the like, the movement of which is blocked in the second state such that the flow of liquid is essentially prevented.

In an embodiment, the membrane filtration device is arranged to operate in a cross-flow filtration mode.

In this embodiment, the liquid purification process need not be interrupted for back-rinsing. In use, there is both a flow of liquid through the membrane of membranes of the membrane filtration device and a flow of liquid along the membrane or membranes. Given that the second state is already provided for and adds a certain complexity, there is no need for further complication by providing a way of regularly stopping the flow of liquid through the liquid inlet and the filtrate outlet to the accumulator in order to carry out rinsing of the membrane or membranes in the membrane filtration device.

An embodiment of the apparatus includes a pump for lowering pressure at the filtrate outlet.

The pump increases the trans-membrane pressure differential, resulting in a higher filtrate quality.

In an embodiment, in which the membrane filtration device is arranged to operate in a cross-flow filtration mode and the apparatus includes a pump for lowering pressure at the filtrate outlet, the membrane filtration device includes an outlet for retentate, and the pump is arranged to be driven by a flow of liquid from the retentate outlet.

This obviates the need for an (additional) external power supply to increase the trans-membrane pressure differential. It is sufficient to provide the untreated liquid at a relatively high pressure. The retentate will have an only slightly lower pressure and do work by driving the pump before flowing to drain.

In a variant of the embodiment that includes a pump for lowering pressure at the filtrate outlet, the metering device is comprised in the pump.

This is a relatively simple embodiment, because the pump already moves more or less in proportion to the amount of filtrate. This is in particular true if the pump is a positive-displacement pump. In that case, each stroke or revolution corresponds to an essentially fixed volume of liquid. The delay can be implemented by a mechanism that ensures that the pump carries out at least one cycle or part of a cycle of movement subsequent to the crossing of the threshold by the value of the parameter. The number of cycles or size of the part of a cycle may be fixed for consistency of filtrate quality or it may merely be non-negligible on average (i.e. over a number of cycles of filling and emptying the accumulator).

In an embodiment of the apparatus, the transition is dependent on the pressure in the accumulator.

As explained, the accumulator generally holds the filtrate under pressure from an external source, at least once filled with more than a certain volume of filtrate. At fill levels above that certain volume, the pressure will increase with the volume of liquid, so that the pressure in the accumulator corresponds relatively well with the volume of liquid in the accumulator. This pressure can be transferred relatively easily to an hydraulic or pneumatic fluid or to a mechanical actuating system for effecting the change between the first and second state. By contrast, the volume of the liquid in the accumulator can really only be measured using a device providing an electrical signal that would need to be processed or converted.

According to another aspect, the method of purifying a liquid according to the invention is characterised by causing at least one of an interruption and a resumption of filtrate production as a consequence of a value of the parameter crossing a threshold to be delayed using a device for metering a flow of liquid.

It is thus ensured that at least some filtrate flows into or out of the accumulator subsequent to the parameter value indicating that the accumulator has become full or relatively empty, respectively.

An embodiment of the method includes metering at least a pre-determined volume upon enabling a transition from the second to the first state before enabling a transition to the second state.

Diffusion results in a lower purity of filtrate when little or no liquid flows through the membrane(s) of the membrane filtration device. By ensuring that at least a minimum volume of liquid flows through in each filtrate production phase, the impurities that have passed through the membrane are diluted. The overall quality of the filtrate in the accumulator is thus improved.

An embodiment of the method includes the use of an apparatus according to the invention.

The invention will be explained in further detail with reference to the accompanying drawings, in which:
- Fig. 1: is a schematic diagram of an apparatus for purifying a liquid;
- Fig. 2: is a schematic cross-sectional diagram of a pump in the apparatus of Fig. 1;
- Fig. 3: is a front view of part of a ratchet mechanism with which the pump is provided;
- Fig. 4: is a rear view of a ratchet wheel comprised in the ratchet mechanism; and
- Fig. 5: is a cross-sectional view through part of a wall of the pump and through the ratchet wheel of Figs. 3 and 4.

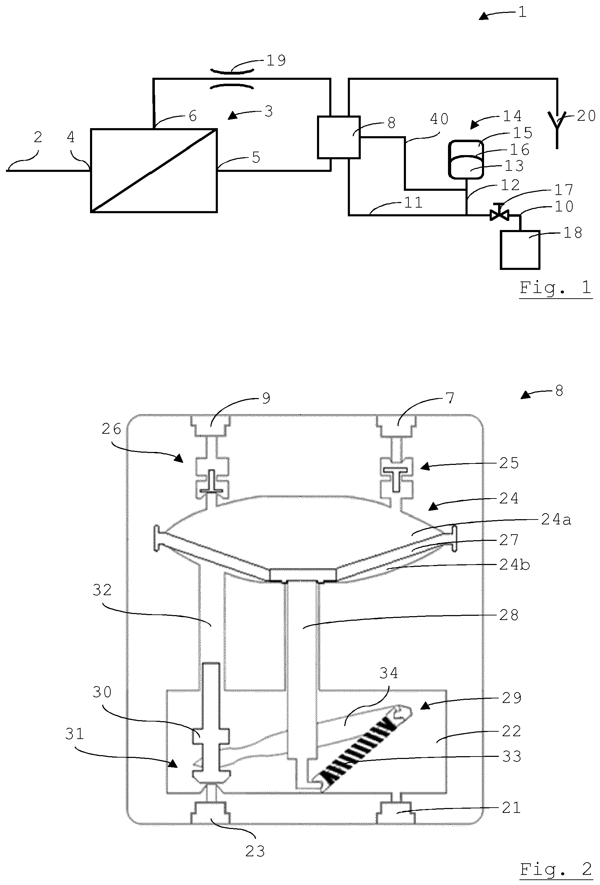

An apparatus 1 for purifying an aqueous liquid such as mains water includes an inlet 2 and a membrane filtration device 3 (Fig. 1).

A pump (not shown) may be arranged between the apparatus inlet 2 and an inlet 4 of the membrane filtration device 3 in one embodiment. This depends at least in part on the desired purity of the filtrate and the pressure at which liquid to be treated is supplied to the apparatus inlet 2.

One or more pre-filters (not shown) may be arranged between the apparatus inlet 2 and the filtration device inlet 4. These may include at least one of a depth filter, a filter for reducing the carbonate hardness or the total hardness of water passing through it and a filter comprising activated carbon.

The membrane filtration device 3 includes at least one more membrane module including at least one membrane (not shown in detail). The membrane module may include a spiral wound membrane module, a hollow fibre membrane module a tubular membrane module and/or a membrane in sheet form mounted on a frame, for example. The membrane filtration device 3 is arranged to operate in cross-flow mode. The liquid that passes through the at least one membrane forms the filtrate and leaves the membrane filtration device 3 through a filtrate outlet 5. The liquid that flows tangentially across, but not through, the membrane forms retentate (also referred to as concentrate). It leaves the membrane filtration device 3 through a retentate outlet 6.
The membrane filtration device 3 may be arranged to effect microfiltration, ultrafiltration, nanofiltration or reverse osmosis. Thus, the at least one membrane may be effective to remove at least one solute from the liquid to be purified at the pressure differential at which it is operated. This pressure differential will generally be within a range of 1 to 5 bar, e.g. within a range having a lower limit of 1, 1,5 or 2 bar and an upper limit of 2 or 3 bar. The membrane may include only pores having a pore size of at most 10 Å, for example.

The filtrate outlet 5 is connected to a suction port 7 of a pump 8 (Figs. 1 and 2) for reducing the pressure at the filtrate outlet 5. This pump 8, when operational, thus increases a transmembrane pressure differential. This in turn increases the purity of the filtrate.

A non-return valve (not shown), also referred to as a one-way valve or check valve, may be arranged in the filtrate outlet 5 or between the filtrate outlet 5 and the suction port 7.

A filtrate outlet port 9 of the pump 8 is connected to an apparatus outlet 10 via an outlet conduit 11, from which a conduit section 12 branches off to a filtrate reservoir 13 in an accumulator 14 (Fig. 1).

The filtrate reservoir 13 in the accumulator 14 is held under pressure by at least one part external to the filtrate reservoir 13. This may be a spring or other elastic part, a raised weight or, as illustrated, a closed gas reservoir 15. The illustrated accumulator 14 is thus a hydropneumatic accumulator. An impermeable membrane or similar barrier 16 including at least a movable section for approximating the pressure in the filtrate reservoir 13 and that in the reservoir 15 external to the filtrate reservoir 13 separates the filtrate reservoir 13 from the further reservoir 15 in the accumulator 14.

In the illustrated embodiment, a shutoff valve 17 is arranged in the outlet conduit 11. The shutoff valve 17 may be electrically powered and/or manually operable. The apparatus outlet 10 will typically be connected to at least one appliance 18 arranged to draw purified liquid. The at least one appliance 18 may be arranged to draw purified liquid at a varying rate and/or intermittently. The accumulator 14 allows this rate temporarily to exceed the rate at which filtrate is produced. In an embodiment, the appliance 18 may be configured such that the shutoff valve 17 can be dispensed with.

The pump 8 of the illustrated embodiment is a positive-displacement pump. A fixed amount of filtrate is pumped with each stroke.

In the illustrated embodiment, the pump 8 is arranged to be driven by the flow of retentate from the retentate outlet 6. A variable throttle 19 determines the pressure drop across the pump 8, and thus the rate at which it is operated. The variable throttle 19 may also be placed on the downstream side of the pump 8 in the path between the retentate outlet 6 and a drain 20.

A retentate inlet port 21 allows the retentate to enter a first chamber 22 in the pump 8 (Fig. 2). The retentate leaves the first chamber 22 through a retentate outlet port 23. Filtrate can enter a second chamber 24 through the suction port 7 and leave through the filtrate outlet port 9. Check valves 25,26 are arranged between the suction port 7 and the second chamber 24 and the filtrate outlet port 9 and the second chamber 24, respectively. A diaphragm 27 separates the second chamber 24 into a filtrate section 24a and a retentate section 24b. The diaphragm 27 is connected to a piston 28 that in turn is connected to a linkage mechanism 29 for actuating a valve element 30 of a retentate valve 31. The piston 28 is arranged to move with the diaphragm 27. In an alternative embodiment, there may be a rigid piston instead of the diaphragm 27. The diaphragm 27, however, is more effective at separating retentate from filtrate than a piston with piston rings or the like would be.

A channel 32 interconnects the first chamber 22 and the retentate section 24b of the second chamber 24. With the retentate valve 31 closed, retentate entering through the retentate inlet port 21 cannot leave through the retentate outlet port 23. The retentate will thus tend to move the diaphragm 27 to expel filtrate from the second chamber 24. This moves the piston 28. At a certain position of the piston 28, the retentate valve 31 will open, allowing the retentate to flow out of the first chamber 22. This causes the diaphragm 27 to move back and draw filtrate into the second chamber 24. A spring 33 or similar elastic biasing device ensures that the retentate valve 31 snaps into the closed and the open positons, and is held there. An end of a bar 34 of the linkage mechanism 29 is arranged to move relative to the valve element 30 of the retentate valve 31, so that the retentate valve 31 is only opened at the end of the stroke of the piston 28.

Further details on the operation of the type of pump presented here as an example are provided in WO 95/30472 A1, for example.

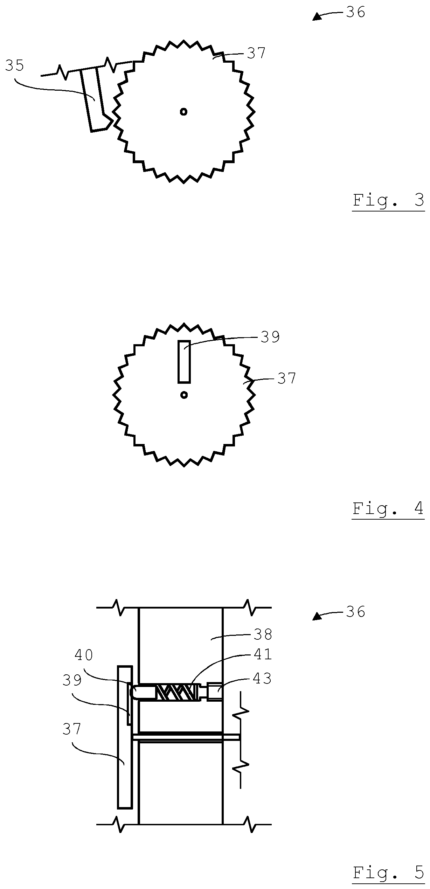

In the pump 8 of the example, the linkage mechanism 29 also couples the piston 28 to a pawl 35 of a ratchet mechanism 36 further including a ratchet wheel 37 (Figs. 3-5). The ratchet wheel 37 is thus arranged to be advanced by a certain amount with each stroke of the pump 8. In this way, the movement of the ratchet wheel 37 corresponds more or less exactly to the amount of filtrate that passes from the filtrate outlet 5 to the accumulator 14 when no filtrate is being supplied through the apparatus outlet 10.

The ratchet wheel 37 may be arranged on a wall 38 (Fig. 5) of the first chamber 22 (Fig. 2), for example.

Movement of the ratchet wheel 37 is arrestable in dependence on the pressure of the filtrate in the filtrate reservoir 13 of the accumulator 14, but only in a certain position of the ratchet wheel 37, i.e. in a certain phase of its cyclical movement.

In the illustrated embodiment, the ratchet wheel 37 is provided with a recess 39 (Figs. 4 and 5) at a particular angular position. A detent ball 40 (Fig. 5) is biased by a spring 41 or similar resilient part against the side of the ratchet wheel 37 in which the recess 39 is provided. A pressure transmission line 42 (Fig. 1) is connected to a port 43 (Fig. 5). This enables the pressure transmission line 42 hydraulically to transmit a pressure signal representative of the pressure in the filtrate reservoir 13 to the detent ball 40 via the spring 41. Above a certain threshold, the pressure is sufficient for the detent ball 40 to arrest the ratchet wheel 37 and stop the pump 8. This stops the flow of filtrate from the filtrate outlet port 9.

In use, in situations in which no filtrate is being delivered through the apparatus outlet 10 or the rate at which it is being delivered is lower than the rate at which it is being produced, the filtrate reservoir 13 is filled up until the threshold for arresting the pump 8 is reached. However, because the detent ball 40 will generally not be aligned with the recess 39 at that moment in time, the pump 8 will continue to operate and supply filtrate. The interruption in the production of filtrate is delayed. The pressure can thus rise above the threshold level, as the filtrate reservoir 13 continues to be filled.

If, with the pump 8 stopped, the at least one appliance 18 subsequently starts to draw filtrate through the apparatus outlet 10, the pressure in the filtrate reservoir 13 will start to drop. Because of the previous delay in stopping the operation of the pump 8 a certain volume of liquid will need to be removed from the filtrate reservoir 13 before the pressure in the filtrate reservoir 13 drops below the threshold pressure level at which the detent ball 40 is no longer able to hold the pump 8. Filtrate production then recommences.

The maximum volume that is added to the filtrate reservoir 13 upon reaching the threshold value of the pressure can be set through an appropriate configuration of the ratchet mechanism 36. The higher this volume, the higher the quality of the filtrate in the filtrate reservoir 13. This is because the first filtrate that is produced after the pump 8 recommences operation has a lower quality due to diffusion through the membrane(s) in the membrane filtration device 3 when the liquid is stagnant. Even if the at least one appliance 18 draws relatively small volumes of filtrate intermittently, the filtrate reservoir 13 is still emptied of a relatively large volume before filtrate production recommences. After filtrate production has recommenced, it is not immediately interrupted once the threshold value of the pressure in the filtrate reservoir 13 has been reached. It continues due to the delay introduced by the ratchet mechanism 36.

Because the position of the ratchet wheel 37 is not always the same when the threshold pressure level is reached, the metered volume is variable. In practice, the variation is relatively low if the amount of filtrate supplied through the apparatus outlet 10 whilst filtrate is being produced is relatively small, or if the supply rate does not vary much. In those cases, the threshold value of the pressure will generally be reached at about the same position of the ratchet wheel 37 each time. In an alternative embodiment (not shown), however, variability is addressed by a device for coupling and decoupling the ratchet mechanism 36 from the linkage mechanism 29 in dependence on the value of the pressure in the filtrate reservoir. In other words, the apparatus 1 includes a device for engaging and disengaging the metering mechanism in dependence on the value of the parameter corresponding to at least one of a volume of the liquid in the accumulator 14, a pressure of the liquid in the accumulator 14 and a pressure differential between the liquid in the accumulator 14 and liquid in a section of the apparatus 1 for liquid unfiltered by the membrane filtration device 3.

The invention is not limited to the embodiment described above, which may be varied within the scope of the accompanying claims. It is possible to provide a separate metering device in the conduit section 12 or between the conduit section 12 and the apparatus outlet 10 for example. Such a metering device could also be cyclical, for example, and be used to hold the pressure in the pressure transmission line 42 until a certain stage in the cycle has been reached again. In this way, it would be possible to delay the resumption of the operation of the pump 8 after the pressure in the filtrate reservoir 13 has dropped below a certain threshold value. The effect would be the same: the filtrate reservoir is emptied of a relatively large volume of filtrate before filtrate production resumes, and is filled with this volume before it is interrupted again.

It is also observed that a metering device including a mechanism with a movable part driven by or with the liquid being metered need not be very exact. It is sufficient that movement of the movable part corresponds approximately with the passage of liquid, such that the liquid drives the mechanism or the mechanism is coupled to a pump arranged to displace the liquid. However, where a more consistent quality of permeate is desirable, the metering mechanism will include a positive displacement device.

### List of reference numerals

- 1: - apparatus
- 2: - apparatus inlet
- 3: - membrane filtration device
- 4: - filtration device inlet
- 5: - filtrate outlet
- 6: - retentate outlet
- 7: - suction port
- 8: - pump
- 9: - filtrate outlet port
- 10: - apparatus outlet
- 11: - outlet conduit
- 12: - conduit section
- 13: - filtrate reservoir
- 14: - accumulator
- 15: - further reservoir
- 16: - barrier
- 17: - shutoff valve
- 18: - appliance
- 19: - variable throttle
- 20: - drain
- 21: - retentate inlet port
- 22: - first chamber
- 23: - retentate outlet port
- 24: - second chamber
- 24a: - filtrate section of second chamber
- 24b: - retentate section of second chamber
- 25: - inlet check valve
- 26: - outlet check valve
- 27: - diaphragm
- 28: - piston
- 29: - linkage mechanism
- 30: - valve element
- 31: - retentate valve
- 32: - channel between first and second chamber
- 33: - spring
- 34: - bar
- 35: - pawl
- 36: - ratchet mechanism
- 37: - ratchet wheel
- 38: - first chamber wall
- 39: - recess
- 40: - detent ball
- 41: - biasing spring acting on the detent ball
- 42: - pressure transmission line
- 43: - port

## Claims

1. Apparatus for purifying a liquid, including:
a membrane filtration device (3) including at least a liquid inlet (4) and an outlet (5) for filtrate;
an accumulator (14); and
a device (8) for regulating a flow of liquid, switchable between a first state, in which liquid is at least permitted to flow through the liquid inlet (4) and the filtrate outlet (5) to the accumulator (14), and a second state, in which this flow is essentially prevented,
the switch being dependent on a parameter corresponding to at least one of a volume of the liquid in the accumulator (14), a pressure of the liquid in the accumulator (14) and a pressure differential between the liquid in the accumulator (14) and liquid in a section of the apparatus for liquid unfiltered by the membrane filtration device (3),
**characterised by**
a device (24-28,36) for metering a flow of liquid, arranged to delay a transition from one of the first and second states to the other that is in consequence of a value of the parameter crossing a threshold.

2. Apparatus according to claim 1,
wherein the metering device (24-28, 36) is arranged at least to meter a flow of filtrate.

3. Apparatus according to claim 1 or 2,
wherein the metering device (24-28, 36) includes a first movable part (37), arranged to move in proportion to a metered amount of liquid,
wherein the first movable part (37) is arranged to enable a second movable part (40) to be actuated into engagement with a co-operating part (39) in dependence on a value of the parameter in only at least one certain position of the first movable part (37), and
wherein the flow regulating device (8) is in one of the first and second states only when the second movable part (40) engages the co-operating part (39) to a certain extent.

4. Apparatus according to claim 3,
wherein the second movable part (40) is actuated by an hydraulic fluid having a pressure representative of, e.g. corresponding to, a value of the parameter.

5. Apparatus according to claim 3 or 4,
wherein the first movable part (37) is arranged to move at least one of the second movable part, the co-operating part (39), a part in a path between the second movable part and the co-operating part and a part in a fluid path from a source of pressurised hydraulic fluid to the second movable part.

6. Apparatus according to any one of the preceding claims,
wherein the metering device (24-28, 36) is arranged to meter at least a pre-determined volume upon enabling a transition from the second to the first state before a transition to the second state is enabled.

7. Apparatus according to any one of the preceding claims,
wherein the metering device (24-28, 36) is cyclical, a cycle corresponding to a certain amount of metered liquid, and
wherein the transition is only enabled at at least one certain stage in the cycle.

8. Apparatus according to any one of the preceding claims,
wherein the metering device (24-28, 36) is arranged to enable the transition upon a certain amount of liquid having been metered subsequent to the value of the parameter crossing the threshold.

9. Apparatus according to any one of the preceding claims,
wherein the metering device (24-28, 36) is included in the device (8) for regulating the flow of liquid, and
wherein the state in which the flow of liquid is essentially prevented is a state in which movement of at least one movable part (28,37) of the metering device (24-28, 36) is prevented.

10. Apparatus according to any one of the preceding claims,
wherein the membrane filtration device (3) is arranged to operate in a cross-flow filtration mode.

11. Apparatus according to any one of the preceding claims, including
a pump (8) for lowering pressure at the filtrate outlet (5).

12. Apparatus according to claim 10 and 11,
wherein the membrane filtration device (3) includes an outlet (6) for retentate, and
wherein the pump (8) is arranged to be driven by a flow of liquid from the retentate outlet (6).

13. Apparatus according to claim 11 or 12,
wherein the metering device (24-28, 36) is comprised in the pump (8).

14. Method of purifying a liquid, including:
operating a membrane filtration device (3) to produce at least filtrate; and
storing the filtrate in an accumulator (14),
wherein production of the filtrate is interrupted in dependence on a parameter corresponding to at least one of a volume of the filtrate in the accumulator (14), a pressure of the filtrate in the accumulator (14) and a pressure differential between the filtrate in the accumulator (14) and liquid unfiltered by the membrane filtration device, **characterised by**
causing at least one of an interruption and a resumption of filtrate production as a consequence of a value of the parameter crossing a threshold to be delayed using a device (24-28, 36)for metering a flow of liquid.

15. Method according to claim 14,
including metering at least a pre-determined volume upon enabling a transition from the second to the first state before enabling a transition to the second state.
